Europäisches Patentamt

European Patent Office

Office européen des brevets

(19)

(11) Numéro de publication : **0 100 258**
**B1**

(12) **FASCICULE DE BREVET EUROPÉEN**

(45) Date de publication du fascicule du brevet :
**18.06.86**

(51) Int. Cl.⁴ : **B 29 C 45/18**

(21) Numéro de dépôt : **83401397.1**

(22) Date de dépôt : **07.07.83**

(54) Dispositif d'assistance vibratoire pour installation de moulage, notamment pour matière synthétique et installation de moulage comportant un tel dispositif d'assistance vibratoire.

(30) Priorité : **13.07.82 FR 8212279**

(43) Date de publication de la demande :
**08.02.84 Bulletin 84/06**

(45) Mention de la délivrance du brevet :
**18.06.86 Bulletin 86/25**

(84) Etats contractants désignés :
**DE FR GB IT**

(56) Documents cités :
**FR-A- 1 041 108**
**FR-A- 2 110 497**
**FR-A- 2 486 861**
**FR-A- 2 490 548**
**US-A- 4 017 237**

(73) Titulaire : **LEGRAND**
**128 Avenue du Maréchal de Lattre de Tassigny**
**F-87045 Limoges Cédex (FR)**

(72) Inventeur : **Astier, Jean-François**
**132 Briance Chalusset**
**F-87220 Boisseuil Feytiat (FR)**
Inventeur : **Bessaguet, Louis**
**48 Rue du Mas Loge**
**F-87100 Limoges (FR)**
Inventeur : **Laplanche, Michel**
**Route des Allois Eyjeaux**
**F-87220 Feytiat (FR)**

(74) Mandataire : **CABINET BONNET-THIRION**
**95 Boulevard Beaumarchais**
**F-75003 Paris (FR)**

EP 0 100 258 B1

Jouve, 18, rue St-Denis, 75001 Paris, France

## Description

La présente invention concerne d'une manière générale le moulage de quelconques matières, et elle vise plus particulièrement celui des matières synthétiques dites plastiques, que celles-ci comportent ou non une quelconque charge.

Ainsi qu'on le sait, dans les installations de moulage mises en œuvre à cet effet, qui, globalement, comportent une tête d'alimentation et au moins un moule à desservir, il est procédé, successivement, à une élévation plus ou moins accentuée de la température de la matière à mouler, pour en provoquer le ramollissement, voire même la liquéfaction, puis à une introduction, en pratique sous pression, de la matière ainsi réchauffée dans le moule à desservir, en tenant compte de son retrait éventuel à la prise, et, enfin, à un refroidissement de la matière ainsi moulée jusqu'à ce qu'elle retrouve un état suffisamment proche de l'état solide pour conserver ensuite sans déformation la forme qui lui a été imprimée.

En pratique, température et pression sont mises.en œuvre pour conférer à la matière moulée une fluidité suffisante pour lui permettre de passer dans des conditions satisfaisantes à travers le seuil d'alimentation du moule à desservir et d'épouser ensuite également dans des conditions encore satisfaisantes la cavité de moulage de celui-ci.

Pour augmenter cette fluidité, il faut donc, normalement, soit augmenter la température, soit augmenter la pression.

Une augmentation de la température est toujours inévitablement dispendieuse, alors même qu'il faut ensuite refroidir.

Quant à une augmentation de la pression, elle est fréquemment difficile à obtenir, sans complication notable, et donc également dispendieuse, de l'ensemble de l'installation.

En outre, dans l'un et l'autre cas, l'énergie consommée est importante.

Dans ces conditions, il n'est pas rare, au refroidissement de la matière moulée, notamment lorsque celle-ci est plus ou moins chargée, en fibres de verre ou de carbone par exemple, de constater, localement, dans les pièces obtenues, des zones de moindre robustesse dues à une mauvaise répartition de la matière et/ou à un refroidissement prématuré de celle-ci, voire même des retassures, c'est-à-dire des lacunes de matière, ces zones de moindre robustesse ou ces retassures affectant en pratique préférentiellement les parois minces, les voiles, ou les portions de configuration complexe que peuvent comporter de telles pièces.

Il en résulte fréquemment un taux de rebut non négligeable pour celles-ci.

Pour pallier ces inconvénients, il a été proposé, dans la demande de brevet français déposée le 24 septembre 1980 sous le N° 80 20869 et publiée sous le N° 2 490 548, de procéder à une sollicitation vibratoire de la matière en cours de moulage, en insérant, entre la tête d'alimentation de l'installation de moulage concernée et le ou les moules à desservir par celle-ci, un dispositif d'assistance vibratoire comportant un corps, dit ici par commodité corps de connexion, qui, formant entretoise, comporte intérieurement au moins un canal de distribution propre à permettre la communication nécessaire entre ladite tête d'alimentation et le ou lesdits moules.

Mais, en pratique, dans FR-A- 2 490 548, le corps de connexion ainsi mis en œuvre forme par lui-même un élément d'excitation, et, pour ce faire, il comporte un circuit magnétique massif, qui, réalisé en un matériau à très fort coefficient d'hystérésis et à fortes pertes par courants de Foucault, est soumis à l'action d'un circuit électrique inducteur alternatif.

Il en résulte divers inconvénients.

Tout d'abord, un tel corps de connexion ne peut manquer de présenter un volume important, qui en rend difficile l'insertion entre la tête d'alimentation et le ou les moules d'une installation de moulage traditionnelle, et qui en interdit donc pratiquement l'utilisation pour du matériel déjà existant.

En outre, la fréquence d'excitation, liée à la fréquence du réseau d'alimentation de l'ensemble, est nécessairement relativement faible, inférieure en tout cas à 1 kHz.

Conjointement, l'amplitude des vibrations obtenues est relativement importante.

La conjonction d'une fréquence ainsi relativement basse et d'une amplitude ainsi relativement élevée conduit inévitablement à soumettre le matériel en cause à des contraintes mécaniques très importantes, préjudiciables à sa longévité.

Enfin, la puissance nécessaire est également nécessairement très importante, supérieure en tout cas à 10 kW dans le cas du moulage de pièces de dimensions moyennes.

La présente invention a d'une manière générale pour objet une disposition permettant d'éviter ces inconvénients.

De manière plus précise, elle a tout d'abord pour objet un dispositif d'assistance vibratoire pour installation de moulage, du genre destiné à intervenir entre la tête d'alimentation d'une telle installation et au moins un moule de celle-ci, et comportant un corps, dit ici par commodité corps de connexion présentant intérieurement au moins un canal de distribution propre à permettre une communication entre cette tête d'alimentation et ce moule, ce dispositif d'assistance vibratoire étant d'une manière générale caractérisé en ce qu'il comporte, latéralement, en liaison avec ledit corps de connexion, un bras d'excitation soumis à un générateur de vibrations ; elle a encore pour objet une installation de moulage comportant un tel dispositif d'assistance vibratoire.

Grâce à la disposition latérale du bras d'excitation qui lui est associé, qui permet une implanta-

2

tion latérale du générateur de vibrations correspondant, le corps de connexion du dispositif d'assistance vibratoire suivant l'invention ne présente avantageusement par lui-même qu'un encombrement réduit, cet encombrement se trouvant en pratique d'autant plus réduit que ledit corps de connexion est accordé à la fréquence des vibrations qui lui sont transmises par ce bras d'excitation, et que celles-ci est elle-même plus élevée.

La mise en place d'un tel corps de connexion entre la tête d'alimentation d'une installation de moulage et le (ou les) moule(s) à desservir par celle-ci s'en trouve facilité.

De manière avantageuse, une telle mise en place peut même ainsi aisément se faire sur du matériel déjà existant.

Quoi qu'il en soit, cette mise en place peut par exemple se faire entre la tête d'alimentation de l'installation de moulage concerné et le moule de celle-ci, ou au sein même d'une telle tête d'alimentation ou d'un tel moule.

Quoi qu'il en soit, également, le générateur de vibrations mis en œuvre est un transducteur apte à délivrer des vibrations mécaniques en réponse à des impulsions électriques, et, de préférence, ce transducteur est un transducteur ultrasonique.

L'amplitude des vibrations auxquelles est ainsi soumise la matière à mouler tout au long de la veine fluide qu'elle forme est de ce fait avantageusement très faible, tout en étant suffisante, d'une part pour réduire les points de contact, et donc les forces de frottement, entre cette matière et les parois qui la confinent, et, d'autre part, pour en élever localement la température dans les zones de rétreint.

Le remplissage du moule s'en trouve amélioré.

Les conditions, et notamment les conditions de température et de pression, étant égales par ailleurs, les pièces moulées obtenues présentent donc avantageusement, grâce au dispositif d'assistance vibratoire suivant l'invention, un aspect plus régulier et une meilleure homogénéité, le risque qu'elles présentent des zones de moindre robustesse et/ou des retassures étant largement minimisé, voire même annulé, et ceci d'autant plus que, corollairement, si désiré, la température initiale de la matière moulée peut être abaissée.

Le taux de rebut s'en trouve avantageusement réduit.

Conjointement, les contraintes mécaniques auxquelles est soumis le matériel sont très faibles, voire inexistantes, et la puissance à mettre en œuvre, y compris celle nécessaire à d'éventuels moyens de chauffage complémentaires, est relativement réduite, en étant toujours inférieure par exemple à 10 kW.

En bref, le dispositif d'assistance vibratoire suivant l'invention permet d'améliorer au moindre coût les conditions de moulage de la matière traitée.

Certes, il est proposé, dans le brevet américain US-A- 4 017 237, la mise en œuvre d'ultrasons dans une installation de moulage.

Mais il n'y s'agit pas d'assurer, au sens de la présente invention, une assistance vibratoire du moulage.

Il y s'agit, en effet, d'appliquer simplement les ultrasons à la commande en couverture ou fermeture d'une porte interposée sur le canal d'alimentation d'une au moins des empreintes que comporte le moule concerné.

Une telle disposition peut donc en pratique être assimilée à la réalisation d'une vanne à commande par ultrasons, étant entendu que, pour le résultat recherché, à savoir une alimentation séquentielle dûment contrôlée des diverses empreintes dudit moule, tout autre type de vanne pourrait aussi bien convenir.

En outre, la vanne à commande par ultrasons ainsi proposée intervient par réchauffement de la matière à mouler, par augmentation rapide de la température de celle-ci, ce qui implique inévitablement une consommation non négligeable en énergie.

Enfin, si, dans ce brevet américain N° 4 017 237 il est effectivement mis en œuvre un transducteur, celui-ci est simplement appliqué à un bloc à la surface duquel est formé un canal propre à l'écoulement de la matière à mouler.

Dans la présente invention, il est au contraire proposé une réelle assistance vibratoire du moulage, comme explicité ci-dessus.

Les caractéristiques et avantages de l'invention ressortiront d'ailleurs de la description qui va suivre, à titre d'exemple, en référence aux dessins schématiques annexés sur lesquels :

la figure 1 est une vue partielle en élévation d'une installation de moulage équipé d'un dispositif d'assistance vibratoire suivant l'invention ;

la figure 2 reprend, à échelle supérieure, et avec des arrachements locaux, la figure 1 ;

la figure 3 est une vue en coupe transversale, suivant la ligne III-III de la figure 2 ;

la figure 4 est, à échelle différente, une vue analogue à celle de la figure 2, et concerne une variante de réalisation ;

la figure 5 est, à échelle différente, et partie en élévation, partie en coupe axiale, une vue analogue à celle de la figure 2, pour une variante de mise en œuvre de l'invention ;

la figure 6 est, également, en coupe axiale, une vue analogue à celle de la figure 2, pour une autre variante de mise en œuvre de l'invention ;

la figure 7 reprend, à échelle supérieure, le détail de la figure 6 repéré par un encart VII sur celle-ci.

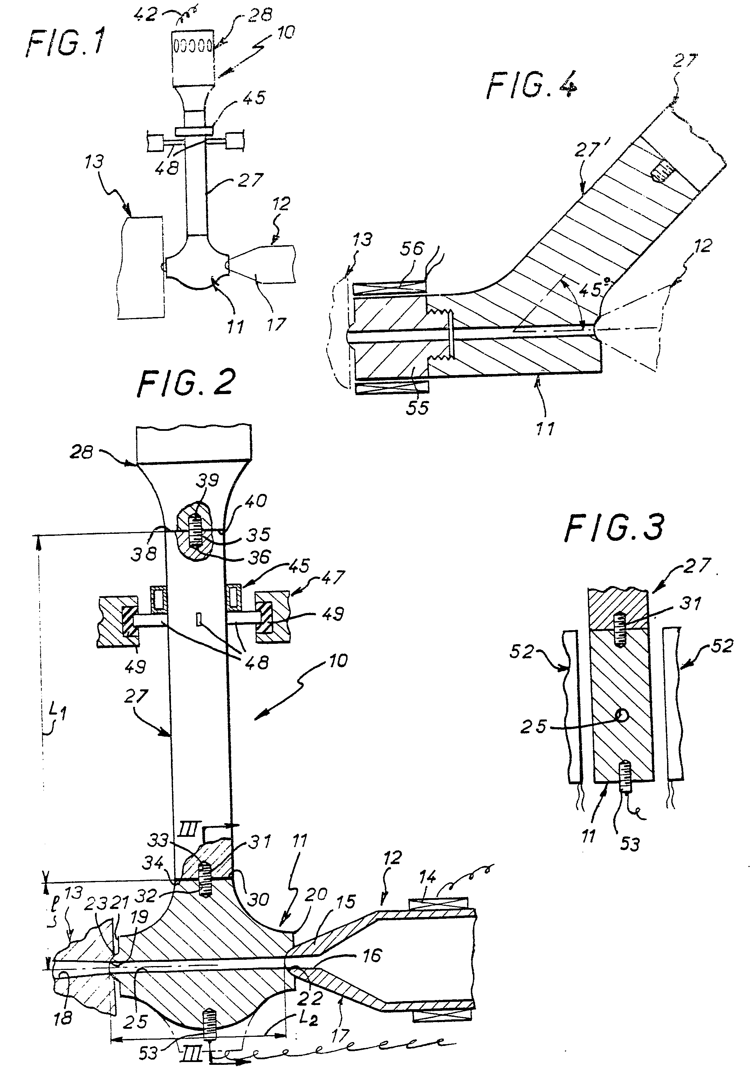

Tel qu'illustré sur ces figures, et plus particulièrement sur la figure 1, le dispositif d'assistance vibratoire 10 suivant l'invention est destiné à intervenir entre, d'une part, la tête d'alimentation 12 d'une quelconque installation de moulage, et, d'autre part, au moins un moule 13 à desservir par celle-ci.

Une telle tête d'alimentation 12 et un tel moule 13 étant bien connus par eux-mêmes et ne faisant pas en soi, pour l'essentiel partie de la présente invention, ils ne seront pas décrits en détail ici.

S'agissant de la forme de mise en œuvre

illustrée par les figures 1, 2, il suffira de supposer que la tête d'alimentation 12 se réduit à une buse d'injection 17.

En effet, dans cette forme de mise en œuvre, le dispositif d'assistance vibratoire suivant l'invention comporte un corps 11 dit ici par commodité corps de connexion, qui, formant entretoise, est simplement inséré entre la tête d'alimentation 12 et le moule 13 concerné.

Tel que représenté, la buse d'injection 17 de cette tête d'alimentation 12 peut être entourée par un collier chauffant 14.

Dans la forme de réalisation représentée, l'extrémité de son nez 15, qui est bien entendu percé axialement d'un canal d'injection 16, est globalement convexe.

Conjointement, le moule 13 présente, autour du débouché de son canal d'alimentation 18, une cuvette 19 de configuration concave complémentaire de celle convexe du nez 15 de la tête d'alimentation 12.

De ce fait, dans la forme de réalisation représentée, les faces transversales d'extrémité 20, 21 par lesquelles le corps de connexion 11 est apte à être inséré entre la tête d'alimentation 12 et le moule 13, qui sont des faces globalement planes, parallèlement l'une à l'autre, ont, dans leur zone médiane, une configuration particulière, adaptée à celle correspondante de ladite tête d'alimentation 12 et dudit moule 13 : la face transversale d'extrémité 20 forme, dans sa zone médiane, une cuvette 22, de configuration concave complémentaire de celle de l'extrémité du nez 15 de la tête d'alimentation 12, et la face transversale d'extrémité 21 porte, en saillie, dans sa zone médiane, un bossage 23 de configuration convexe complémentaire de celle de la cuvette 19 du moule 13.

La configuration de ce bossage 23 est donc la réplique, en négatif, de celle de la cuvette 22.

Quoi qu'il en soit, de cette cuvette 22 à ce bossage 23, le corps de connexion 11 présente, intérieurement, un canal de distribution 25, propre à permettre la communication nécessaire entre la tête d'alimentation 12 et le moule 13.

Suivant l'invention, le dispositif d'assistance vibratoire 10 comporte, latéralement, en liaison avec le corps de connexion 11, un bras d'excitation 27 soumis à un générateur de vibrations 28.

Globalement, ce bras d'excitation 27 s'étend transversalement par rapport au canal de distribution 25 du corps de connexion 11, et, plus précisément, par rapport à l'axe de ce canal de distribution 25, qui est rectiligne.

Dans la forme de réalisation illustrée par les figures 1 à 3, il s'étend perpendiculairement à cet axe, et il se raccorde donc au corps de connexion 11 par une face latérale 30 de celui-ci perpendiculaire à ses faces transversales d'extrémité 20, 21.

Dans la forme de réalisation représentée, le bras d'excitation 27 est rapporté sur le corps de connexion 11 par un goujon prisonnier 31, engagé à vissage tant dans un perçage borgne 32 ménagé à cet effet sur le corps de connexion 11, dans la zone médiane de sa face latérale 30, que dans un perçage borgne 33 également ménagé à cet effet sur le bras d'excitation 27, dans la zone médiane de sa tranche d'extrémité 34 correspondante.

De même, dans la forme de réalisation représentée, le générateur de vibrations 28 est rapporté sur le bras d'excitation 27, à l'extrémité de celui-ci opposée au corps de connexion 11, par un goujon prisonnier 35, qui est engagé à vissage, tant dans un perçage borgne 36 ménagé à cet effet sur ce bras d'excitation 27, dans la zone médiane de sa tranche d'extrémité 38 correspondante, que dans un perçage borgne 39 également ménagé à cet effet sur le générateur de vibrations 28, dans la zone médiane de la tranche 40 qui en forme l'extrémité correspondante.

De préférence, le générateur de vibrations 28 est un transducteur apte à délivrer des vibrations mécaniques en réponse à des impulsions électriques, et, de préférence également, il s'agit d'un transducteur ultrasonique.

Un tel générateur de vibrations étant bien connu par lui-même, et ne faisant pas partie de la présente invention, il ne sera pas décrit en détail ici.

Il suffira de préciser qu'il peut s'agir par exemple d'un générateur de vibrations du type de ceux commercialisés par la Firme BRANSON.

Des générateurs de vibrations de fréquence égale à 20 kHz ou 40 kHz ont notamment donné satisfaction, étant entendu que de telles valeurs de fréquence ne doivent en rien être considérées comme limitatives de la présente invention.

Quoi qu'il en soit, un tel générateur de vibrations 28 doit être relié par une filerie 42 à un quelconque générateur d'impulsions électriques, non représenté, susceptible d'en assurer l'excitation.

De préférence, le corps de connexion 11 et le bras d'excitation 27 doivent être accordés à sa fréquence.

Pour ce faire, la longueur L1 du bras d'excitation 27, mesurée entre le corps de connexion 11 et le générateur de vibrations 28, au droit des interfaces 30-34 et 38-40 correspondants, est de préférence égale à n fois la demi-longueur d'onde du générateur de vibrations 28, n étant un entier supérieur ou égal à un.

Conjointement, la demi-largeur 1 du corps de connexion 11, mesurée entre son canal de distribution 25 et le bras d'excitation 27, au droit de l'axe de ce canal de distribution 25 et de l'interface 30-34 concerné, est de préférence égale au quart de la longueur d'onde du générateur de vibrations 28.

Il est ainsi assuré que, par rapport au générateur de vibrations 28, la partie médiane du canal de distribution 25 du corps de connexion 11 se trouve dans une zone nodale, c'est-à-dire à un nœud des vibrations délivrées par ce générateur de vibrations 28.

Corollairement, la longueur L2 du corps de connexion 11, mesurée parallèlement à l'axe de son canal de distribution 25, entre ses faces d'extrémité 20, 21, au droit des zones médianes de sa cuvette 22 et de son bossage 23 correspondants, est de préférence égale à n fois la demilongueur d'onde du générateur de vibrations 28, n étant un entier supérieur ou égal à un, et, de préférence également, simplement égal à un pour limiter l'encombrement axial de l'ensemble.

Il est ainsi assuré que les zones de transfert de la matière de la tête d'alimentation 12 au corps de connexion 11, d'une part, et de ce corps de connexion 11 au moule 13, d'autre part, qui sont des zones critiques, sont avantageusement dans des zones antinodales par rapport au générateur de vibrations 28.

Il est rappelé à cet égard que la propagation des ultrasons est en pratique indifférente aux éventuels coudes ou changements d'orientation pour l'axe de propagation correspondant.

Quoi qu'il en soit, du fait de la complémentarité des configurations de ses faces transversales d'extrémité 20, 21 concernées, le corps de connexion 11 présente avantageusement des masses identiques aux zones antinodales correspondantes, ce qui est favorable à son accord acoustique à l'égard des vibrations.

En pratique, le bras d'excitation 27 est un simple barreau, de section transversale carrée par exemple, découpé à la longueur désirée.

Son matériau constitutif est de préférence choisi pour présenter, d'une part, de bonnes qualités de transmission à l'égard des vibrations mécaniques, pour favoriser le rendement de l'ensemble, et d'autre part, au contraire, de bonnes qualités d'isolation à l'égard de la chaleur, pour épargner celle-ci au générateur de vibrations 28.

Le titane, par exemple, donne satisfaction.

Si désiré, pour réduire encore toute possibilité de transmission de la chaleur du corps de connexion 11 au générateur de vibrations 28, il peut être associé au bras d'excitation 27 des moyens de refroidissement, tels que, par exemple, le collier 45, qui entourant ce bras d'excitation 27, dans la forme de réalisation représentée sur les figures 1 à 4, est adapté à être parcouru par un quelconque fluide de refroidissement.

Le bras d'excitation 27 peut également assurer le maintien de l'ensemble.

Par exemple, et tel que représenté, il peut être à cet effet relié à un bâti 47, qui est en pratique le bâti de l'installation de moulage concernée, ou qui est solidaire de celui-ci, par des moyens élastiques, et par exemple par des bras élastiques 48 établis transversalement en rayons autour de lui, chacun de ces bras 48 étant, à son extrémité opposée, ancré dans une noix en matière élastique 49 portée par le bâti 47.

Conjointement, le corps de connexion 11 peut être constitué par une simple plaque métallique, en acier par exemple, convenablement découpée.

Dans la forme de réalisation représentée sur les figures 1 à 3, ce corps de connexion 11 a globalement une configuration en T inversée, dont le jambage est relié au bras d'excitation 27, et dont les ailes s'étendent entre la tête d'alimentation 12 et le moule 13.

De sa face latérale 30 à ses faces transversales d'extrémité 20, 21, sa découpe est par exemple circulaire ou hyperbolique.

Mais elle peut également être quelconque.

Du côté opposé à sa face latérale 30, sa découpe peut par exemple présenter deux points d'inflexions, pour recouper sensiblement orthogonalement ses faces transversales d'extrémité 20, 21, de part et d'autre d'une portion médiane globalement arrondie en saillie en direction opposée à sa face latérale 30.

Mais, bien entendu, d'autres découpes, et donc d'autres configurations, sont possibles pour le corps de connexion 11.

Par exemple, et tel que schématisé en traits interrompus sur la figure 2, la configuration de celui-ci peut être globalement cruciforme.

Quoi qu'il en soit, il y est de préférence associé des moyens de chauffage.

Tel que schématisé à la figure 3, ceux-ci comportent par exemple deux rampes de chauffage par rayonnement infrarouge 52, disposées latéralement, chacune respectivement de part et d'autre du corps de connexion 11, entre la tête d'alimentation 12 et le moule 13.

De telles rampes de chauffage étant bien connues par elles-mêmes, elles ne seront pas décrites en détail ici.

Leur puissance peut par exemple être de l'ordre de 500 W.

Il résulte de ce qui précède que la puissance totale instantanée du dispositif d'assistance vibratoire 10 suivant l'invention peut être de l'ordre de 1 à 5 kW.

Elle est en tout cas le plus souvent largement inférieure à 10 kW.

Si désiré, et tel que représenté, un capteur de température 53 peut être implanté dans le corps de connexion 11 par exemple à l'opposé du bras d'excitation 27, pour assurer une régulation de son chauffage et/ou de celui de la tête d'alimentation 12.

Dans la variante de réalisation illustrée par la figure 4, le bras d'excitation 27 s'étend globalement en oblique par rapport à l'axe du canal de distribution 25 du corps de connexion 11.

Par exemple, et tel que représenté, il s'étend à 45° par rapport à cet axe.

Pour son raccordement au bras d'excitation 27, le corps de connexion 11 présente lui-même en oblique un bras 27'.

Dans la variante de réalisation représentée sur cette figure 4, l'extrémité du corps de connexion 11 disposée du côté du moule 13 à desservir forme un embout 55, qui, distinct de la partie courante de ce corps de connexion 11, est convenablement rapporté sur celle-ci, par exemple par vissage, pour la prolonger, et, conjointement, une partie au moins des moyens de chauffage associés au corps de connexion 11 forme un collier 56, autour de l'embout 55 formant l'extrémité concernée de celui-ci.

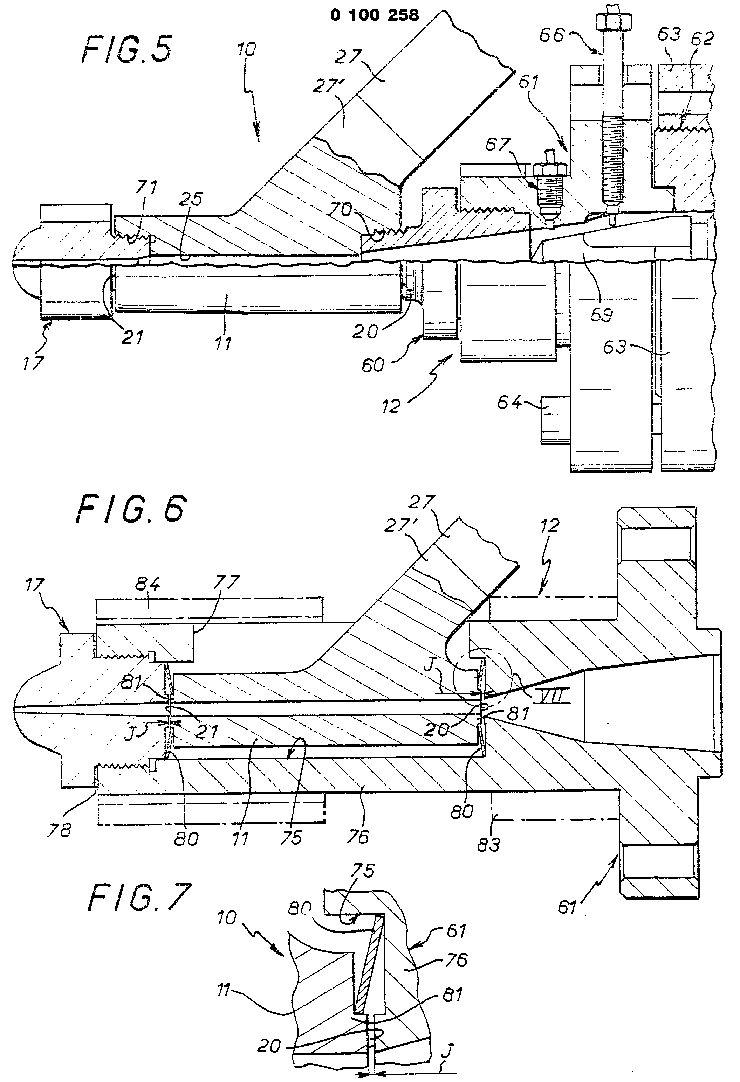

Dans la forme de mise en œuvre illustrée par la figure 5, le corps de connexion 11 du dispositif vibratoire 10 suivant l'invention, formant entretoise, est inséré entre deux pièces appartenant à la tête d'alimentation 12.

Une première de ces pièces est constituée par la buse d'injection 17 de cette tête d'alimentation 12.

La deuxième est constituée, dans la forme de réalisation représentée, par un manchon adaptateur 60, rapporté par vissage, sur la pièce 61, communément dite « embout de pot », interposée entre la tête d'alimentation 12 et le corps 62 de la presse d'injection desservant celle-ci.

Un tel embout de pot 61 peut lui-même être directement vissé sur le corps 62 de cette presse d'injection, ou, tel que représenté, lui être rapporté à l'aide de demi-brides 63 sur lesquelles il est lui-même fixé par des vis 64.

Quoi qu'il en soit, cet embout de pot 61 est communément mis à profit, tel que représenté, pour l'implantation d'au moins un capteur de température 66 et d'au moins d'un capteur de pression 67, et, usuellement, la tête 69 de la vis de la presse d'injection y pénètre axialement au moins pour partie.

Comme précédemment, ces dispositions sont bien connues par elles-mêmes, et, ne faisant pas partie de la présente invention, elles ne seront pas décrites plus en détail ici.

Dans la forme de réalisation représentée, le corps de connexion 11 du dispositif d'assistance vibratoire 10 suivant l'invention est rapporté par vissage sur les pièces 60, 17 entre lesquelles il est inséré, des chambrages taraudés 70, 71 étant prévus à cet effet sur ses faces transversales d'extrémités 20, 21 correspondantes et les dites pièces 17, 60 étant également dotées à cet effet d'embouts filetés appropriés.

Il va de soi que, en variante, d'autres modes de fixation peuvent être envisagés.

Il va de soi, également, que, au lieu d'être ainsi rapporté sur un manchon adaptateur 60 interposé entre lui et l'embout de pot 61 de la tête d'alimentation 12, le corps de connexion 11 du dispositif d'assistance vibratoire 10 suivant l'invention pourrait aussi bien être directement rapporté sur cet embout de pot 61.

Il va de soi, enfin, que, suivant des dispositions semblables, ce corps de connexion 11 pourrait aussi bien être inséré entre deux pièces appartenant au moule 13 ou liées à celui-ci.

Alors que, dans ce qui précède, le corps de connexion 11 du dispositif d'assistance vibratoire 10 est lié de manière relativement rigide aux pièces entre lesquelles il est inséré, il en est proposé, dans la forme de mise en œuvre illustrée par les figures 6, 7, un montage flottant.

En effet, dans cette forme de mise en œuvre, ce corps de connexion 11 est monté flottant, au moins longitudinalement, dans un logement 75, à l'encontre de moyens élastiques.

Dans la forme de réalisation représentée, ce logement 75 appartient à la tête d'alimentation 12, et, plus précisément, à l'embout de pot 61 de celle-ci, celui-ci étant doté à cet effet, axialement, d'un nez 76.

Le logement 75 que présente celui-ci débouche labéralement par une fente 77, qui, d'une part, permet la mise en place du corps de connexion 11, éventuellement par présentation en biais de celui-ci, si sa longueur, tel que représenté, est inférieure à celle de ce corps de connexion 11, et qui, d'autre part, après une telle mise en place, livre le passage nécessaire au bras 27' de ce dernier.

Axialement, l'une des parois transversales du logement 75 appartient au nez 76 de l'embout de pot 61, tandis que l'autre appartient à la buse d'injection 17, celle-ci étant rapportée, par vissage, en bout dudit nez 76.

Pour des raisons qui apparaîtront ci-après, une ou plusieurs cales 78, dûment calibrées en épaisseur, sont axialement interposées entre la buse d'injection 17 et l'extrémité, ou tranche, du nez 76 de l'embout de pot 61.

Entre le corps de connexion 11 du dispositif d'assistance vibratoire 10 et chacune des parois transversales du logement 75 dans lequel il est disposé, est prévu, suivant l'invention, longitudinalement, un jeu J, qui, au repos, est au moins égal à l'amplitude des vibrations délivrées par le générateur de vibrations 28 associé, non représenté sur la figure 6, en n'étant de préférence que légèrement supérieur à celle-ci.

Dans la forme de réalisation représentée, les moyens élastiques assurant le montage flottant du corps de connexion 11 dans son logement 75 comporte au moins une rondelle Belleville 80 à chacune des extrémités dudit corps de connexion 11.

En principe, dans la forme de réalisation représentée, seule une rondelle Belleville 80 a ainsi été prévue à chacune des extrémités du corps de connexion 11.

Quoi qu'il en soit, suivant un développement de l'invention, les rondelles Belleville 80 ainsi mises en œuvre assurent conjointement le centrage du corps de connexion 11 dans son logement 75.

Dans la forme de réalisation représentée, le corps de connexion 11 présente à cet effet, à chacune de ses extrémités, un prolongement axial 81, sur lequel est engagé, par sa périphérie interne la rondelle Belleville 80 correspondante, cependant que, par sa périphérie externe, cette rondelle Belleville 80 coopère avec la paroi latérale longitudinale du logement 75.

Bien entendu, c'est la face transversale d'extrémité d'un tel prolongement axial 81 qui forme, dans ce cas, la face transversale d'extrémité correspondante, 20 ou 21, du corps de connexion 11 par rapport à laquelle est apprécié le jeu J.

En pratique, les deux rondelles Belleville 80 ainsi mises en œuvre, qui interviennent de façon symétriquement opposée l'une par rapport à l'autre, présentent chacune une même charge de compression, convenablement tarée, à cet effet, et elles sont également convenablement rectifiées, pour présenter l'une et l'autre les mêmes cotes.

Au repos, le jeu J est donc le même à l'une et à l'autre des extrémités du corps de connexion 11.

Ainsi qu'il est aisé de le comprendre, la ou les cales 18 mises en œuvre entre la buse d'injection 17 et l'extrémité du nez 76 de l'embout de pot 61 permettent de régler ce jeu J à la valeur optimale souhaitée.

Il faut, d'une part, qu'il n'y ait pas en service de contact entre le corps de connexion 11 et les parois transversales correspondantes du logement 75 dans lequel il est disposé, et, d'autre part, que la matière en cours d'injection ne puisse pas fuir latéralement à la faveur des interstices correspondants.

L'expérience montre que des jeux de l'ordre de 10 à 15 microns donnent à cet égard le plus souvent satisfaction.

Elle montre également que la matière en cours d'injection ne fuit pas latéralement lorsque ces jeux sont supérieurs de quelques microns à l'amplitude des vibrations mises en œuvre.

Celle-ci peut dès lors être de l'ordre par exemple de 10 microns, très supérieure, en tout cas, à celle admissible avec les montages précédents.

L'assistance vibratoire obtenue s'en trouve améliorée, étant entendu, toutefois, que ce n'est pas obligatoirement l'amplitude la plus élevée qui assure les meilleurs résultats pour toutes les matières synthétiques susceptibles d'être concernées.

Le choix de la ou des cales 78 permet l'adaptation nécessaire.

Ainsi qu'on le notera, par son montage flottant, le corps de connexion 11 du dispositif d'assistance vibratoire 10 suivant l'invention se trouve maintenu dans son logement 75 par simple compression.

En outre, le nez 76 de l'embout de pot 61 alors mis en œuvre présente encore l'avantage d'autoriser le montage de manière traditionnelle de colliers de chauffage 83, à la racine de ce nez 76, formant l'embout de pot proprement dit, et 84, au droit de la buse d'injection 17.

Bien entendu, au lieu d'appartenir à la tête d'alimentation 12, le logement 75 dans lequel est ainsi monté flottant le corps de connexion 11 du dispositif anti vibratoire 10 suivant l'invention peut aussi bien, suivant une variante non représentée, appartenir au moule 13, ou à une pièce solidaire de celui-ci.

La présente invention ne se limite d'ailleurs pas aux formes de réalisation et de mises en œuvre décrites et représentées, mais englobe toute variante d'exécution et/ou de combinaison de leurs divers éléments.

En particulier, lorsque le corps de connexion du dispositif d'assistance vibratoire suivant l'invention comporte latéralement un bras, ce bras peut en constituer directement le bras d'excitation, l'ensemble étant alors d'un seul tenant, et le générateur de vibrations étant directement appliqué à cet ensemble.

La présente invention ne se limite pas non plus aux valeurs numériques plus particulièrement indiquées, celles-ci n'ayant été données qu'à titre illustratif.

En particulier, le générateur de vibrations n'est pas nécessairement ultrasonique, des fréquences de 10 kHz, ou inférieures, pouvant encore convenir, bien que pour le confort acoustique de l'environnement, au moins, des fréquences ultrasoniques soient préférables.

Enfin, le domaine d'application de l'invention n'est pas nécessairement limité à celui du seul moulage de matières synthétiques, mais peut aussi bien s'étendre au moulage de métaux par exemple.

Dans tous les cas, le dispositif d'assistance vibratoire suivant l'invention assure avantageusement une assistance mécanique sans élévation sensible de la température et/ou de la pression, et l'énergie nécessaire à l'excitation au générateur de vibrations mis en œuvre est pratiquement négligeable en égard à la puissance par ailleurs mises en œuvre pour le processus de moulage concerné.

## Revendications

1. Dispositif d'assistance vibratoire pour installation de moulage, du genre destiné à intervenir entre la tête d'alimentation (12) d'une telle installation et au moins un moule (13) de celle-ci, et comportant un corps de connection (11) présentant intérieurement au moins un canal de distribution (25) propre à permettre une communication entre cette tête d'alimentation (12) et ce moule (13), caractérisé en ce qu'il comporte, latéralement, en liaison avec ledit corps de connection (11), un bras d'excitation (27) soumis à un générateur de vibrations (28).

2. Dispositif d'assistance vibratoire suivant la revendication 1, caractérisé en ce que, pour son raccordement au bras d'excitation (27) le corps de connexion (11) présente lui-même un bras (27').

3. Dispositif d'assistance vibratoire suivant l'une quelconque des revendications 1, 2 caractérisé en ce que le bras d'excitation (27) s'étend globalement en oblique par rapport à l'axe du canal de distribution (25) du corps de connexion 11.

4. Installation de moulage, notamment pour matière synthétique, du genre comportant, entre une tête d'alimentation (12) et au moins un moule (13), un dispositif d'assistance vibratoire (10) d'un corps de connexion (11) comportant au moins un canal de distribution (25) propre à permettre une communication entre cette tête d'alimentation (12) et ce moule (13), caractérisé en ce que ledit dispositif d'assistance vibratoire (10) est conforme à l'une quelconque des revendications 1 à 3.

5. Installation de moulage suivant la revendication 4 caractérisée en ce que, formant entretoise, le corps de connexion (11) du dispositif d'assistance vibratoire (10) est inséré entre la tête d'alimentation (12) et le moule (13) concerné.

6. Installation de moulage suivant la revendication 5 caractérisée en ce que, l'une quelconque des faces transversales d'extrémité (20, 21) du corps de connexion (11) du dispositif d'assistance vibratoire (10) ayant une configuration particulière, concave ou convexe par exemple, adaptée à celle correspondante de ladite tête d'alimentation (12) et/ou dudit moule (13), l'autre desdites faces transversales d'extrémité (20, 21) a une configuration, qui convexe ou concave par exemple, est la réplique en négatif de celle de la précédente.

7. Installation de moulage suivant l'une quelconque des revendications 5, 6 caractérisée en ce que le bras d'excitation (27) du dispositif d'assistance vibratoire (10) est relié à un bâti (47) par des moyens élastiques (48).

8. Installation de moulage suivant la revendication 5 caractérisée en ce que, formant entretoise, le corps de connexion (11) du dispositif d'assistance vibratoire (10) est inséré entre deux pièces (17, 60) appartenant à la tête d'alimentation (12).

9. Installation de moulage suivant la revendication 5, caractérisée en ce que, formant entretoise, le corps de connexion (11) du dispositif d'assistance vibratoire (10) est inséré entre deux pièces appartenant au moule (13) ou liées à celui-ci.

10. Installation de moulage suivant l'une quelconque des revendications 8, 9 caractérisée en ce que le corps de connexion (11) du dispositif d'assistance vibratoire (10) est rigidement assujetti aux pièces entre lesquelles il est inséré.

11. Installation de moulage suivant la revendication 5, caractérisée en ce que le corps de connexion (11) du dispositif d'assistance vibratoire (10) est monté flottant, au moins longitudinalement, dans un logement, à l'encontre de moyens élastiques.

12. Installation de moulage suivant la revendication 11, caractérisée entre le corps de connexion (11) du dispositif d'assistance vibratoire (10) et chacune des parois transversales du logement (75) dans lequel il est disposé est prévu longitudinalement un jeu J, qui, au repos, est au moins égal à l'amplitude des vibrations délivrées par le générateur de vibrations (28), en n'étant de préférence que légèrement supérieur à celle-ci.

13. Installation de moulage suivant l'une quelconque des revendications 11, 12, caractérisée en ce que, les moyens élastiques assurant le montage flottant du corps de connexion (11) du dispositif d'assistance vibratoire (10) dans son logement (75) comportant au moins une rondelle Belleville (80) à chacune des extrémités dudit corps de connexion (11), les rondelles Belleville (80) ainsi mises en œuvre assurent conjointement le centrage dudit corps de connexion (11) dans ledit logement (75), ledit corps de connexion (11) présentant à cet effet à chacune de ses extrémités un prolongement axial (81) sur lequel est engagée la rondelle Belleville (80) correspondante.

14. Installation de moulage suivant l'une quelconque des revendications 11 à 13 caractérisée en ce que le logement (75) dans lequel est établi le corps de connexion (11) du dispositif d'assistance vibratoire (10) appartient à la tête d'alimentation (12).

15. Installation de moulage suivant l'une quelconque des revendications 11 à 13 caractérisée en ce que le logement (75) dans lequel est établi le corps de connexion (11) du dispositif d'assistance vibratoire (10) appartient au moule (13) ou à une pièce solidaire de celui-ci.

16. Installation de moulage suivant l'une quelconque des revendications 5 à 15, caractérisée en ce que le générateur de vibrations (28) est un transducteur apte à délivrer des vibrations mécaniques en réponse à des impulsions électriques.

17. Installation de moulage suivant la revendication 16, caractérisée en ce que le transducteur est un transducteur ultrasonique.

18. Installation de moulage suivant l'une quelconque des revendications 5 à 17 caractérisée en ce que, mesurée entre le corps de connexion (11) du dispositif d'assistance vibratoire (20) et le générateur de vibrations (28), la longueur (L1) du bras d'excitation (27) est égale à n fois la demi-longueur d'onde dudit générateur de vibrations (28), n étant un entier supérieur ou égal à 1.

19. Installation de moulage suivant l'une quelconque des revendications 4 ou 5, caractérisée en ce que le bras d'excitation (27) est réalisé en un matériau choisi pour présenter de bonnes qualités de transmission à l'égard des vibrations mécaniques et de bonnes qualités d'isolation à l'égard de la chaleur.

20. Installation de moulage suivant l'une quelconque des revendications 4 à 6, caractérisée en ce que, au bras d'excitation (27) sont associés des moyens de refroidissement (45).

21. Installation de moulage suivant l'une quelconque des revendications 5 à 20 caractérisé en ce que, mesurée entre ses faces transversales d'extrémité, la longueur (L2) du corps de connexion (11) du dispositif d'assistance vibratoire 10 est égale à n fois la demi-longueur d'onde du générateur de vibrations (28), n étant un entier supérieur ou égal à 1.

22. Installation de moulage suivant l'une quelconque des revendications 5 à 21, caractérisée en ce que, mesurée entre son canal de distribution (25) et le bras d'excitation (27), la demi-largeur 1 du corps de connexion (11) du dispositif d'assistance vibratoire (10) est égale au quart de la longueur d'onde de générateur de vibrations (28).

23. Installation de moulage suivant l'une quelconque des revendications 4 à 11, caractérisée en ce que, au corps de connexion (11) du dispositif d'assistance vibratoire (10) sont associés des moyens de chauffage (52, 56).

24. Installation de moulage suivant la revendication 23, caractérisée en ce qu'une partie au moins desdits moyens de chauffage (52, 56) entoure l'extrémité du corps de connexion (11) disposée du côté du moule (13) à desservir, ladite extrémité formant éventuellement un embout (55) qui, distinct de la partie courante du corps de connexion (11), est convenablement rapporté sur celle-ci.

## Claims

1. A vibratory assistance apparatus for a moulding installation of the type intended to operate between the feed head (12) of such an installation and at least one mould (13) thereof and comprising a connecting body (11) internally providing at least one distribution passage (25) for permitting communication between said feed head (12) and said mould (13), characterised in that it comprises laterally and connected to said connecting body (11) an excitation arm (27) which is subjected to a vibration generator (28).

2. A vibratory assistance apparatus according to claim 1 characterised in that, for connection thereof to the excitation arm (27), the connecting body (11) itself has an arm (27').

3. A vibratory assistance apparatus according to either one of claims 1 and 2 characterised in that the excitation arm (27) extends generally inclinedly with respect to the axis of the distribution passage (25) of the connecting body (11).

4. A moulding installation in particular for synthetic material of the type comprising between a feed head (12) and at least one mould (13) a vibratory assistance apparatus (10) for a connecting body (11) comprising at least one distribution passage (25) for permitting a communication between said feed head (12) and said mould (13), characterised in that said vibratory assistance apparatus (10) is in accordance with any one of claims 1 to 3.

5. A moulding installation according to claim 4 characterised in that, forming a spacer member, the connecting body (11) of the vibratory assistance apparatus (10) is inserted between the feed head (12) and the mould (13) in question.

6. A moulding installation according to claim 5 characterised in that, any one of the transverse end faces (20, 21) of the connecting body (11) of the vibratory assistance apparatus (10) being of a particular configuration, for example concave or convex, which is adapted to the corresponding configuration of said feed head (12) and/or said mould (13), the other of said transverse end faces (21, 22) is of a configuration which, being convex or concave for example, is the counterpart in negative form of that of the preceding face.

7. A moulding installation according to either one of claims 5 and 6 characterised in that the excitation arm (27) of the vibratory assistance apparatus (10) is connected to a frame (47) by resilient means (48).

8. A moulding installation according to claim 5 characterised in that, forming a spacer member, the connecting body (11) of the vibratory assistance apparatus (10) is inserted between two parts (17, 60) belonging to the feed head (12).

9. A moulding installation according to claim 5 characterised in that, forming a spacer member, the connecting body (11) of the vibratory assistance apparatus (10) is inserted between two parts belonging to the mould (13) or connected thereto.

10. A moulding installation according to either one of claims 8 and 9 characterised in that the connecting body (11) of the vibratory assistance apparatus (10) is rigidly connected to the parts between which it is inserted.

11. A moulding installation according to claim 5 characterised in that the connecting body (11) of the vibratory assistance apparatus (10) is mounted floatingly at least longitudinally in a housing against the force of resilient means.

12. A moulding installation according to claim 11 characterised in that between the connecting body (11) of the vibratory assistance apparatus (10) and each of the transverse walls of the housing (75) in which it is disposed there is longitudinally a clearance J which in the rest condition is at least equal to the amplitude of the vibrations delivered by the vibration generator (28), preferably being only slightly greater than same.

13. A moulding installation according to either one of claims 11 and 12 characterised in that, the resilient means providing for floating mounting of the connecting body (11) of the vibratory assistance apparatus (10) in its housing (75) comprising at least one Belleville washer (80) at each of the ends of said connecting body (11), the Belleville washers (80) which are thus used jointly provide for centering of said connecting body (11) in said housing (75), said connecting body (11) for that purpose having at each of its ends an axial extension portion (81) on which the corresponding Belleville washer (80) is engaged.

14. A moulding installation according to any one of claims 11 to 13 characterised in that the housing (75) in which the connecting body (11) of the vibratory assistance apparatus (10) is disposed belongs to the feed head (12).

15. A moulding installation according to any one of claims 11 to 13 characterised in that the housing (75) in which the connecting body (11) of the vibratory assistance apparatus (10) is disposed belongs to the mould (13) or to a member which is fixed with respect thereto.

16. A moulding installation according to any one of claims 5 to 15 characterised in that the vibration generator (28) is a transducer operable to deliver mechanical vibrations in response to electrical pulses.

17. A moulding installation according to claim 16 characterised in that the transducer is an ultrasound transducer.

18. A moulding installation according to any one of claims 5 to 17 characterised in that, as measured between the connecting body (11) of the vibratory assistance apparatus (20) and the vibration generator (28), the length (L1) of the excitation arm (27) is equal to n times half the wave-length of said vibration generator (28), n being an integer of greater than or equal to 1.

19. A moulding installation according to either one of claims 4 or 5 characterised in that the excitation arm (27) is made of a material selected to present good transmission qualities in regard to the mechanical vibrations and good insulation qualities in regard to heat.

20. A moulding installation according to any one of claims 4 to 6 characterised in that cooling means (45) are associated with the excitation arm (27).

21. A moulding installation according to any one of claims 5 to 20 characterised in that, as measured between its transverse end faces, the length (L2) of the connecting body (11) of the vibratory assistance apparatus (10) is equal to n times half the wavelength of the vibration generator (28), n being an interger of greater than or equal to 1.

22. A moulding installation according to any one of claims 5 to 21 characterised in that, as measured between its distribution passage (25) and the excitation arm (27), the half-width 1 of the connecting body (11) of the vibratory assistance apparatus (10) is equal to a quarter of the wavelength of the vibration generator (28).

23. A moulding installation according to any one of claims 4 to 11 characterised in that heating means (52, 56) are associated with the connecting body (11) of the vibratory assistance apparatus (10).

24. A moulding installation according to claim 23 characterised in that a part at least of said heating means (52, 56) is disposed around the end of the connecting body (11) disposed on the side of the mould (13) to be supplied, said end possibly forming an end portion (55), which, separate from the general part of the connecting body (11), is suitably fitted thereonto.

**Patentansprüche**

1. Schwingungshilfsvorrichtung für Gießanlagen, der Art, die zwischen dem Füllkopf (12) einer solchen Gießanlage und wenigstens einer Form (13) hiervon zur Wirkung kommt und mit einem Verbindungskörper (11), der innen wenigstens einen Verteilerkanal (25) aufweist, der geeignet ist, eine Verbindung zwischen diesem Füllkopf (12) und dieser Form (13) herzustellen, dadurch gekennzeichnet, daß sie seitlich, in Beziehung zu diesem Verbindungskörper (11) einen Erregerarm (27) aufweist, der einem Schwingungsgenerator (28) ausgesetzt ist.

2. Schwingungshilfsvorrichtung nach Anspruch 1, dadurch gekennzeichnet, daß zu seiner Verbindung mit dem Erregerarm (27) der Verbindungskörper (11) selbst einen Arm (27') aufweist.

3. Schwingungshilfsvorrichtung nach einem der Ansprüche 1, 2, dadurch gekennzeichnet, daß der Erregerarm (27) sich im wesentlichen schräg bezüglich der Achse des Verteilerkanals (25) des Verbindungskörpers (11) erstreckt.

4. Gießanlage, insbesondere für Kunststoffmaterial, der Bauart, die zwischen einem Füllkopf (12) und wenigstens einer Form (13) eine Schwingungshilfsvorrichtung (10) eines Verbindungskörpers (11) aufweist, der wenigstens einen Verteilerkanal (25) besitzt, der geeignet ist, eine Verbindung zwischen diesem Speisekopf (12) und dieser Form herzustellen, dadurch gekennzeichnet, daß diese Schwindungshilfsvorrichtung (10) nach einem der Ansprüche 1 bis 3 ausgebildet ist.

5. Gießanlage nach Anspruch 4, dadurch gekennzeichnet, daß als Zwischenstück der Verbindungskörper (11) der Schwingungshilfsvorrichtung (10) zwischen den Füllkopf (12) und die entsprechende Form (13) eingesetzt ist.

6. Gießanlage nach Anspruch 5, dadurch gekennzeichnet, daß eine beliebige der transversalen Stirnflächen (20, 21) des Verbindungskörpers (11) der Schwingungshilfsvorrichtung (10) von besonderer Konfiguration, beispielsweise konkav oder konvex, ist und an die entsprechende des Füllkopfs (12) und/oder der Form (13) angepaßt ist, wobei die andere dieser transversalen Stirnflächen (20, 21) von einer Konfiguration ist, die, beispielsweise konvex oder konkav, negativ zugeordnete Gestalt zur vorherigen aufweist.

7. Gießanlage nach einem der Ansprüche 5, 6, dadurch gekennzeichnet, daß der Erregerarm (27) der Schwingungshilfsvorrichtung (10) mit einem Gestell (47) über elastische Einrichtungen (48) verbunden ist.

8. Gießanlage nach Anspruch 5, dadurch gekennzeichnet, daß als Zwischenstück der Verbindungskörper (11) der Schwingungshilfsvorrichtung (10) zwischen zwei Bauteile (17, 60) eingesetzt ist, welche zum Speisekopf (12) gehören.

9. Gießanlage nach Anspruch 5, dadurch gekennzeichnet, daß als Zwischenstück der Verbindungskörper (11) der Schwingungshilfsvorrichtung (10) zwischen zwei zur Form (13) gehörende oder mit dieser verbundene Bauteile eingesetzt ist.

10. Gießanlage nach einem der Ansprüche 8, 9, dadurch gekennzeichnet, daß der Verbindungskörper (11) der Schwingungshilfsvorrichtung (10) steif an den Bauteilen, zwischen die er eingesetzt ist, befestigt ist.

11. Gießanlage nach Anspruch 5, dadurch gekennzeichnet, daß der Verbindungskörper (11) der Schwingungshilfsvorrichtung (10) frei schwimmend, wenigstens in Längsrichtung, in einem Lager entgegen elastischen Einrichtungen gelagert ist.

12. Gießanlage nach Anspruch 11, dadurch gekennzeichnet, daß zwischen dem Verbindungskörper (11) der Schwingungshilfsvorrichtung (10) und jeder der Querwandungen des Lagers (75), in dem sie vorgesehen ist, in Längsrichtung ein Spiel J vorhanden ist, welches im Ruhezustand wenigstens gleich der Amplitude der Schwingungen ist, die vom Schwingungsgenerator (28) geliefert werden und vorzugsweise nur geringfügig größer als diese ist.

13. Gießanlage nach einem der Ansprüche 11, 12, dadurch gekennzeichnet, daß die elastischen für die Schwimmlagerung des Verbindungskörpers (11) der Schwingungshilfsvorrichtung (10) in ihrem Lager (75) sorgenden Einrichtungen über wenigstens einen Belleville Dichtungsring (80) an jedem der Enden des Verbindungskörpers (11) verfügen, wobei die so eingesetzten Belleville Dichtungsringe (80) zusammen für die Zentrierung des Verbindungskörpers (11) in diesem Lager (75) sorgen, wobei der Verbindungskörper (11) hierzu an jedem seiner Enden eine Axialverlängerung (81) aufweist, auf der der entsprechende Belleville Dichtungsring (80) sitzt.

14. Gießanlage nach einem der Ansprüche 11 bis 13, dadurch gekennzeichnet, daß das Lager (75), in dem der Verbindungskörper (11) der Schwingungshilfsvorrichtung (10) vorgesehen ist, zum Speisekopf (12) gehört.

15. Gießanlage nach einem der Ansprüche 11 bis 13, dadurch gekennzeichnet, daß das Lager (75), in dem der Verbindungskörper (11) der Schwingungshilfsvorrichtung (10) ausgebildet ist, zur Form (13) oder einem hiermit festen Bauteil gehört.

16. Gießanlage nach einem der Ansprüche 5 bis 15, dadurch gekennzeichnet, daß der Schwingungsgenerator (28) ein Wandler ist, der mechanische Schwingungen, abhängig von elektrischen Impulsen, liefert.

17. Gießanlage nach Anspruch 16, dadurch gekennzeichnet, daß der Wandler ein Ultraschallwandler ist.

18. Gießanlage nach einem der Ansprüche 5 bis 17, dadurch gekennzeichnet, daß gemessen zwischen dem Verbindungskörper (11) der Schwingungshilfsvorrichtung (20) und dem Schwingungsgenerator (28) die Länge (L1) des Erregerarms (27) gleich dem n-fachen der halben Längenwelle dieses Schwingungsgenerators (28) ist, wobei n eine ganze Zahl größer oder gleich 1 ist.

19. Gießanlage nach einem der Ansprüche 4 oder 5, dadurch gekennzeichnet, daß der Erregerarm (27) aus einem Material besteht, das so gewählt ist, daß es günstige Schwingungsübertragungseigenschaften und günstige Wärmeisolationseigenschaften besitzt.

20. Gießanlage nach einem der Ansprüche 4 bis 6, dadurch gekennzeichnet, daß dem Erregerarm Kühlmittel (45) zugeordnet sind.

21. Gießanlage nach einem der Ansprüche 5 bis 20, dadurch gekennzeichnet, daß, gemessen zwischen seinen transversalen Stirnflächen, die Länge (L2) des Verbindungskörpers (11) der Schwingungshilfsvorrichtung (10) gleich dem n-fachen der halben Wellenlänge des Schwingungsgenerators (28) ist, wobei n eine ganze Zahl größer oder gleich 1 ist.

22. Gießanlage nach einem der Ansprüche 5 bis 21, dadurch gekennzeichnet, daß, gemessen zwischen seinem Verteilerkanal (25) und dem Erregerarm (27) die Halbe Breite 1 des Verbindungskörpers (11) der Schwingungshilfsvorrichtung (10) gleich der Viertelwellenlänge des Schwingungsgenerators (28) ist.

23. Gießanlage nach einem der Ansprüche 4 bis 11, dadurch gekennzeichnet, daß dem Verbindungskörper (11) der Schwingungshilfsvorrichtung (10) Heizmittel (52, 56) zugeordnet sind.

24. Gießanlage nach Anspruch 23, dadurch gekennzeichnet, daß wenigstens ein Teil der Heizeinrichtungen (52, 56) das Ende des Verbindungskörpers (11) umschließt, das auf der Seite der zu beaufschlagenden Form (13) angeordnet ist, wobei das Ende gegebenenfalls einem Ansatz (55) bildet, welches, indem es sich von dem laufenden Teil des Verbindungskörpers (11) unterscheidet, in zweckmäßiger Weise hierauf aufgesteckt ist.

0 100 258

FIG.1

FIG.4

FIG.2

FIG.3

FIG.5

0 100 258

FIG.6

FIG.7